# EUROPÄISCHE PATENTSCHRIFT

(11) **EP 3 983 134 B1**
(45) Veröffentlichungstag und Bekanntmachung des Hinweises auf die Patenterteilung: **09.08.2023**
(21) Anmeldenummer: 20732127.4
(22) Anmeldetag: 02.06.2020
(51) Int. Cl.: B05B 11/00, G01F 11/02, B05B 11/10

(54) **VORRICHTUNG UND SPRÜHAPPLIKATOR**
APPARATUS AND SPRAY APPLICATOR
DISPOSITIF ET APPLICATEUR À PULVÉRISATION

(30) Priorität: 11.06.2019 CH 7862019
(43) Veröffentlichungstag der Anmeldung: 20.04.2022
(73) Patentinhaber: ELC-Ceratec GmbH, 6331 Hünenberg (CH)
(72) Erfinder: RUFFIEUX, Kurt, 8800 Thalwil (CH); BRANDSBERG, Fredrik, 8038 Zürich (CH); ANDERSON, Mark, 8800 Thalwil (CH)
(74) Vertreter: Bohest AG Branch Ostschweiz
(86) Internationale Anmeldenummer: PCT/EP2020/065186
(87) Internationale Veröffentlichungsnummer: WO 2020/249423

(56) Entgegenhaltungen:
- WO-A1-03/074189
- GB-A- 1 551 038
- GB-A- 2 251 898
- US-A1- 2007 145 077

## Beschreibung

Die vorliegende Erfindung betrifft eine Vorrichtung zur dosierten Abgabe einer Flüssigkeit und einen Sprühapplikator zur Abgabe eines Wirkstoffs gemäss dem Oberbegriff der unabhängigen Ansprüche.

Aus dem Stand der Technik sind unterschiedliche Vorrichtungen zur Abgabe einer Flüssigkeit bekannt geworden.

So sind beispielsweise Nasensprays bekannt geworden, die durch axiales Zusammendrücken des Nasensprays einen Pumpstoss auslösen und die gepumpte Menge an Flüssigkeit in der Form eines Sprühnebels durch eine Ausgabeöffnung abgeben. Dabei wir eine Ausgabeöffnung entsprechend axial verschoben. Somit wird die Ausgabeöffnung beim Gebrauch des Nasensprays in Richtung des Nasenausgangs verschoben, sodass ein Teil des Sprühnebels nicht wie gewünscht in der Nasenhöhle verteilt wird. Durch die Bewegung besteht die Gefahr von Verletzungen und von unzureichender Abgabe eines im Sprühnebel enthaltenen Wirkstoffes.

Typischerweise weisen neuartigere Nasensprays an der Ausgabeöffnung ein Ventil oder einen Verschluss auf, der erst bei einem definierten Druck geöffnet wird, sodass sowohl der Sprühstoss als auch der damit erzeugte Sprühnebel gleichmässig gebildet wird. Die benötigte Kraft beim Zusammendrücken zum Erreichen des notwendigen minimalen Sprühstosses kann für ältere oder handicapierte Menschen zu hoch sein, so dass diese solche Produkte nicht oder nur bedingt anwenden können
Mit der EP 1 616 630 A2 ist ein Spender für Medien bekannt geworden, der einen in Bezug zu einem Behälter fixen Applikator mit einer Ausgabeöffnung aufweist. Durch axiales Bewegen einer Kolbenbaugruppe entgegen einer Federkraft wird eine Dosierkammer mit Flüssigkeit gefüllt. Ab einer bestimmten Lage wird die Kolbenbaugruppe automatisch entkoppelt und es findet ein Austragvorgang durch die Ausgabeöffnung statt. Die Vorrichtung der EP 1 616 630 A2 weist eine Vielzahl an einzelnen Elementen auf, die gegeneinander abgedichtet werden müssen. Entsprechend vielfältig sind die Dichtelemente, die in der Vorrichtung der EP 1 616 630 A2 benötigt werden. Vor dem Betätigen der Vorrichtung muss diese bereits richtig platziert werden, sodass ein Pumpstoss in eine entsprechende Körperöffnung, beispielsweise eine Nasenhöhle, abgegeben werden kann. Für den Benutzer ist es zudem nicht ersichtlich, zu welchem Zeitpunkt genau der Pumpstoss abgegeben wird.

Mit der GB 2 251 989 A ist eine Vorrichtung zur Abgabe eines Sprühstosses bekannt geworden, die ebenfalls eine in Bezug zu einem Grundkörper fixe Ausgabeöffnung aufweist. Durch Drehen einer Kappe wird ein Kolben entgegen einer Federkraft einer Feder bewegt, sodass sich eine Kammer bildet, die mit einer Flüssigkeit gefüllt wird. Am Ende der Bewegung wird der Kolben in dieser Position mit einer Lasche gehalten. Durch Betätigen eines Knopfes wird die Lasche gelöst und die Feder bewegt den Kolben sodass die Flüssigkeit abgegeben wird.

Sowohl bei der Vorrichtung der GB 2 251 989 A als auch bei der Vorrichtung der EP 1 616 630 A2 ist der Füllvorgang abhängig vom Benutzer, das heisst, wie schnell er die Vorrichtung betätigt. Entsprechend wird beim Füllen der jeweiligen Kammern mehr oder weniger Kraft aufgebracht, was erhöhte Anforderungen an die Dichtungen stellt und zu Fehlfunktionen führen kann.

Es ist Aufgabe der Erfindung, einen oder mehrere Nachteile des Standes der Technik zu beheben. Insbesondere sollen eine Vorrichtung zur dosierten Abgabe einer Flüssigkeit aus einem Behälter und/oder ein Sprühapplikator bereitgestellt werden, die einfach zu fertigen und insbesondere einfach in der Anwendung sind. Vorzugsweise wird ein auch bei mehreren Wiederholungen gleichmässiger Sprühstoss bereitgestellt.

Diese Aufgabe wird durch die in dem unabhängigen Patentanspruch definierte Vorrichtung gelöst. Weitere Ausführungsformen ergeben sich aus den abhängigen Patentansprüchen.

Eine erfindungsgemässe Vorrichtung zur dosierten Abgabe einer Flüssigkeit aus einem Behälter, insbesondere zur Abgabe eines Sprühnebels, umfasst einen Grundkörper zum Befestigen am Behälter und einen Düsenkörper mit einer Austrittsdüse. Der Düsenkörper ist in Bezug zum Grundkörper von einer Abgabeposition in eine Spannposition verschiebbar gelagert. Die Vorrichtung weist zudem eine Rückstellfeder zum Bewegen des Düsenkörpers von der Spannposition in die Abgabeposition auf. Die Vorrichtung umfasst einen Ventilkörper der in Bezug auf den Grundkörper von einer Ladeposition in eine Entladeposition verschiebbar gelagert ist. Im Ventilkörper ist ein Rückschlagventil angeordnet. Der Ventilkörper bildet mit dem Düsenkörper eine grössenveränderliche Sprühstosskammer. Die Sprühstosskammer ist mit der Austrittsdüse verbunden.

Diese Konfiguration ermöglicht ein gemeinsames Verschieben des Düsenkörpers mit dem Ventilkörper relativ zum Grundkörper. Die Sprühstosskammer, die der Ventilkörper zusammen mit dem Düsenkörper bildet, ist entsprechend ebenfalls relativ gegenüber dem Grundkörper beweglich und in Bezug zum Grundkörper unabhängig ausgebildet. Eine Abdichtung der Sprühstosskammer gegenüber dem Grundkörper ist nicht notwendig.

Die Anordnung des Rückschlagventils im Ventilkörper ermöglicht ebenfalls eine unabhängige Fertigung und/oder Ausgestaltung des Rückschlagventils vom Grundkörper.

Hier und im Folgenden werden unter dem Begriff Rückschlagventil sämtliche Ventile und/oder Vorrichtungen verstanden, die den Fluss eines Fluides in eine Richtung zulassen und in eine entgegengesetzte Richtung sperren. Beispielhaft seien hier Rückschlagventile mit Kugeln oder mit Klappen genannt.

Die Rückstellfeder ist vorzugsweise derart angeordnet, dass der Düsenkörper entgegen eines Federdrucks oder einer Federkraft der Rückstellfeder von der Abgabeposition in die Spannposition verschiebbar ist. Mit anderen Worten, in einer Ausgangslage wird der Düsenkörper von der Rückstellfeder in der Abgabeposition gehalten.

Der Düsenkörper kann einteilig oder mehrteilig aufgebaut sein und insbesondere Elemente zum Führen eines Fluides aufweisen.

Zur Bildung der Sprühstosskammer kann es vorgesehen sein, dass sowohl am Ventilkörper als auch am Düsenkörper jeweils hohlzylindrische Elemente mit kreisförmigem Querschnitt ausgebildet sind, die ineinandergreifen, insbesondere verschieblich ineinander gelagert sind. Dabei kann es vorgesehen sein, dass diese hohlzylindrischen Elemente zusammen eine Spaltdichtung bilden. Ebenso ist es vorstellbar, dass zumindest an einem der beiden hohlzylindrischen Elemente eine Dichtung aus einem flexiblen Material, beispielsweise eine Lippendichtung, angeordnet ist, die die grössenveränderliche Sprühstosskammer gegenüber ihrer Umgebung abdichtet. Eine Lippendichtung ist entsprechend derart ausgeführt, dass der Ventilkörper gegenüber dem Düsenkörper verschiebbar ist.

Befindet sich der Düsenkörper in der Abgabeposition und der Ventilkörper in der Entladeposition, so weist die Sprühstosskammer ein kleines Volumen auf. Dabei können der Düsenkörper sowie der Ventilkörper derart ausgebildet sein, dass das Volumen der Sprühstosskammer möglichst klein wird, sodass sich in dieser Position lediglich eine geringe Menge eines Fluides in der Sprühstosskammer befinden kann.

Befindet sich der Düsenkörper in der Spannposition und der Ventilkörper in der Ladeposition, so entspricht das Volumen der Sprühstosskammer im Wesentlichen dem Volumen der Sprühstosskammer wenn sich der Düsenkörper in der Abgabeposition und der Ventilkörper in der Entladeposition befindet. Verbleibt nun der Ventilkörper in der Ladeposition und bewegt sich der Düsenkörper durch die Federkraft der Rückstellfeder von der Spannposition in die Abgabeposition, so vergrössert sich das Volumen der Sprühstosskammer. Durch die Vergrösserung des Volumens der Sprühstosskammer ist es ermöglicht, dass ein Fluid in die Sprühstosskammer gefördert wird.

Vorzugsweise entspricht das Volumen der Sprühstosskammer, gebildet durch die Differenz des Volumens der Sprühstosskammer wenn sich der Düsenkörper in der Spannposition und der Ventilkörper in der Ladeposition befindet und des Volumens der Sprühstosskammer wenn sich der Düsenkörper in der Abgabeposition und der Ventilkörper in der Ladeposition befindet, genau einer Dosis eines Medikaments das abgegeben werden muss. Dieses Volumen kann aber auch beispielsweise der Hälfte einer Dosis, einem Drittel einer Dosis, einem Viertel einer Dosis oder einem anderen Bruchteil einer Dosis entsprechen, sodass zwei, drei, vier oder entsprechend mehr Lade- und Abgabevorgänge nötig sind.

Die Vorrichtung weist naturgemäss eine Strömungsrichtung auf, wobei die Austrittsdüse typischerweise am weitesten stromabwärts angeordnet ist und der Behälter in Bezug auf die Strömungsrichtung im Wesentlichen am weitesten stromaufwärts.

Das Rückschlagventil ist vorzugsweise stromaufwärts der Sprühstosskammer angeordnet und verhindert einen Fluss des Fluides von der Sprühstosskammer zurück in den Behälter.

Das Rückstossventil ist vorzugsweise als Kugelrückstossventil ausgebildet und weist entsprechend eine Kugel und eine Feder auf, die die Kugel an einem vorbezeichneten Ort hält. Dabei kann vorgesehen sein, dass die Kugel aus einem metallischen Werkstoff gebildet ist. Die Kugel kann jedoch insbesondere aus einem keramischen Werkstoff gebildet sein um einen Kontakt zwischen metallischen Werkstoff und dem Fluid zu verhindern, insbesondere um Reaktionen zwischen dem metallischen Werkstoff und dem Fluid zu verhindern. Entsprechend kann die Feder, welche die Kugel hält, ebenfalls aus einem nichtmetallischen Werkstoff gebildet sein, wie beispielsweise einem Kunststoff. Es wäre ebenfalls vorstellbar, eine Kugel und/oder eine Feder aus einem metallischen Werkstoff vorzusehen und diese jeweils mit einer entsprechenden Beschichtung zu versehen, sodass ein Kontakt zwischen metallischem Werkstoff und dem durchströmenden Fluid verhindert ist.

Vorzugsweise weist die Vorrichtung eine Sprühstossfeder auf zum Bewegen des Ventilkörpers von der Ladeposition in die Entladeposition.

Dies ermöglicht das Bewegen des Ventilkörpers von der Ladeposition in die Entladeposition, so, dass die Grösse der Sprühstosskammer verändert wird und durch das Verkleinern der Sprühstosskammer ein Inhalt der Sprühstosskammer druckbeaufschlagt und in Richtung der Austrittsdüse befördert und entsprechend durch diese abgegeben wird.

Die Sprühstossfeder ist vorzugsweise derart angeordnet, dass der Ventilkörper entgegen eines Federdrucks oder einer Federkraft der Sprühstossfeder von der Entladeposition in die Ladeposition verschiebbar ist. Mit anderen Worten, in einer Ausgangslage wird der Ventilkörper von der Sprühstossfeder in der Entladeposition gehalten.

Die Vorrichtung kann ein Betätigungselement, vorzugsweise einen Druckring, aufweisen, wobei das Betätigungselement am Düsenkörper angeordnet ist.

Dies ermöglicht das einfache Bewegen des Düsenkörpers.

Das Betätigungselement kann separat ausgebildet sein oder als integraler Bestandteil des Düsenkörpers.

Vorzugsweise ist der Düsenkörper derart mit dem Ventilkörpers in Wirkverbindung oder in Wirkverbindung bringbar, dass ein Verschieben des Düsenkörpers von der Abgabeposition in die Spannposition ein Verschieben des Ventilkörpers von der Entladeposition in die Ladeposition verursacht.

Durch das Bewegen des Düsenkörpers kann der Ventilkörper ebenfalls bewegt werden. Mit anderen Worten, das Verschieben des Düsenkörpers bewirkt ein Verschieben des Ventilkörpers und entsprechend ein Vorspannen der Sprühstossfeder.

Beim gemeinsamen Verschieben des Düsenkörpers und des Ventilkörpers bleibt das Volumen der Sprühstosskammer im Wesentlichen konstant.

Die Vorrichtung kann einen Auslösemechanismus zum Halten des Ventilkörpers in der Ladeposition aufweisen.

Dies ermöglicht das Bereitstellen der Vorrichtung in einer definierten Konfiguration. Insbesondere ist es ermöglicht, dass nach einer Freigabe des Betätigungselementes und der entsprechenden Bewegung des Düsenkörpers zurück in die Abgabeposition der Ventilkörper in der Ladeposition verbleibt.

Durch das Verbleiben des Ventilkörpers in der Ladeposition und das Bewegen des Düsenkörpers zurück in die Ausgabeposition wird das Volumen der Sprühstosskammer vergrössert, was es ermöglicht, ein Fluid in die Sprühstosskammer zu fördern.

Der Ventilkörper wird insbesondere entgegen einer Federkraft der Sprühstossfeder in der Ladeposition gehalten. Dies ermöglicht, dass der Ventilkörper unter einer Vorspannung in der Ladeposition gehalten ist. In diesem Zustand wirkt kein Druck auf das Fluid in der Sprühstosskammer.

Durch das Betätigen des Auslöseelementes und das entsprechende Freigeben des Ventilkörpers wird dieser mittels der Federkraft der Sprühstossfeder in Strömungsrichtung bewegt. Dadurch wird das Volumen der Sprühstosskammer verkleinert und das sich in der Sprühstosskammer befindliche Fluid stromabwärts gefördert. Bei entsprechender Ausbildung der Vorrichtung stromabwärts der Sprühstosskammer kann ein Sprühnebel erzeugt werden.

Eine Förderung des Fluides aus der Sprühstosskammer kann alternativ durch ein erneutes Verschieben des Düsenkörpers erfolgen. In der Ladeposition des Ventilkörpers bewirkt ein Verschieben des Düsenkörpers von der Abgabeposition in die Spannposition eine Verkleinerung des Volumens der Sprühstosskammer. Das Verschieben des Düsenkörpers erfolgt insbesondere durch das Betätigen des Betätigungselementes. Entsprechend kann durch das Betätigen des Düsenkörpers und das Verschieben von der Abgabeposition in die Spannposition die Sprühstosskammer verkleinert werden, sodass das sich in der Sprühstosskammer befindliche Fluid ebenfalls stromabwärts gefördert wird.

Die Abgabe des Fluides kann damit ohne das Betätigen des Auslösemechanismus erfolgen.

Die Förderung des Fluides stromabwärts wird durch die Anordnung des Rückschlagventils im Ventilkörper ermöglicht.

Alternativ ist es vorstellbar, dass die Vorrichtung ein Sperrelement aufweist, das derart angeordnet ist, dass ein Verschieben des Düsenkörpers von der Abgabeposition in die Spannposition verhindert ist, wenn sich der Ventilkörper in der Ladeposition befindet.

Dies verhindert eine gegebenenfalls unerwünschte Manipulation der Vorrichtung im geladenen Zustand.

Der Auslösemechanismus kann ein Halteelement aufweisen und insbesondere seitlich des Ventilkörpers angeordnet sein. Vorzugsweise ist der Auslösemechanismus quer zu einer Strömungsrichtung der Flüssigkeit durch Ventilkörper betätigbar.

Dies ermöglicht ein einfaches Anordnen des Auslösemechanismus und insbesondere des Halteelementes sowie ein einfaches Betätigen des Auslösemechanismus. Zudem entspricht eine derartige Anordnung der Ergonomie der Hand, welche die Vorrichtung hält und erleichtert dadurch die Bedienung.

Das Halteelement ist vorzugsweise radial zur Strömungsrichtung beweglich, was insbesondere durch die seitliche Anordnung des Auslösemechanismus ermöglicht ist.

Es kann vorgesehen sein, das Sperrelement auf dem Halteelement anzuordnen.

Dies ermöglicht ein einfaches Verhindern des Fördern des Fluides ohne Betätigen des Auslösemechansimus. Bei einer radialen Beweglichkeit des Halteelementes kann das Sperrelement einfach zwischen dem Düsenkörper und dem Grundkörper oder einem entsprechenden Widerlager eingebracht werden und ein Verschieben des Düsenkörpers verhindert werden.

Vorzugsweise umfasst das Halteelement den Ventilkörper zumindest bereichsweise, insbesondere auf zwei Seiten und vorzugsweise vollständig.

Das Umfassen weist den Vorteil auf, dass der Auslösemechanismus mit dem Halteelement derart angeordnet werden kann, dass der Auslösemechanismus durch Druck betätigbar ist. Im Weiteren ermöglicht die derart gestaltete Konstruktion ein Halten des Ventilkörpers ohne dass der Flüssigkeitsstrom gekreuzt wird und entsprechende Abdichtungen am Halteelement und/oder am Ventilkörper vorgenommen werden müssen.

Das bereichsweise Umfassen ermöglicht ein sicheres und passgenaues Halten und/oder Blockieren des Ventilkörpers durch das Halteelement. Ein Umfassen des Ventilkörpers auf zwei Seiten ermöglicht eine gleichmässige Verteilung von Kräften zwischen dem Halteelement und dem Ventilkörper.

Vorzugsweise weiss das Halteelement, insbesondere zum Umfassen des Ventilkörpers, eine Öffnung mit zumindest einem Arretierelement auf.

Der Ventilkörper kann insbesondere zum Zusammenbau der Vorrichtung durch die Öffnung des Haltelementes eingebracht werden, wobei das Arretierelement eine Wirkverbindung mit dem Ventilelement ermöglicht.

Vorzugsweise sind am Ventilkörper Elemente zum Zusammenwirken mit den Arretierelement, insbesondere Kerben, Vertiefungen oder Einschnitte zum Eingriff der Arretierelemente angeordnet.

Das Halteelement kann eine Öffnung aufweisen. Die Öffnung weist zwei unterschiedliche Querschnitte auf. Die Öffnung ist insbesondere als zwei ineinandergreifende Kreisöffnungen unterschiedlichen Durchmessers ausgebildet.

Kreisöffnungen ermöglichen ein einfaches Umfassen des Ventilkörpers. Durch die Ausgestaltung der Öffnung als zwei Kreisöffnungen unterschiedlichen Durchmessers kann die Montage und/oder der Zusammenbau der Vorrichtung vereinfacht werden. Der grössere Querschnitt erlaubt es, den Ventilkörper im Wesentlichen kontaktfrei in die Öffnung einzubringen und der kleinere Querschnitt ermöglicht es, das Halteelement in Wirkverbindung mit dem Ventilkörper zu bringen, so, dass das Ventilelement in der Ladeposition gehalten werden kann.

Bei einer derartigen Ausgestaltung fallen das Arretierelement und der Bereich der Öffnung mit dem kleineren Querschnitt zusammen.

Es kann vorgesehen sein, dass die Elemente am Ventilkörper zum Zusammenwirken mit den Arretierelementen als eine umlaufende Nut ausgebildet sind. Diese Nut kann einen Durchmesser aufweisen, der im Wesentlichen dem Durchmesser der kleineren Kreisöffnung, welche das Arretierelement bereitstellt, entspricht.

Am Auslösemechanismus kann eine Rückstellvorrichtung, insbesondere eine Feder, zum Halten des Halteelementes in einer Endlage angeordnet sein.

Eine Rückstellvorrichtung ermöglicht es, den Auslösemechanismus in einer definierten Lage zu halten.

Der Rückstellmechanismus ist vorzugsweise quer zur Strömungsrichtung des Fluides und insbesondere im Wesentlichen parallel zur Bewegungsrichtung des Auslösemechanismus angeordnet.

Das ermöglicht ein Einrasten des Arretierelementes in ein entsprechendes Element am Ventilkörper, sobald sich diese Elemente in einer entsprechenden Lage zueinander befinden. Mit anderen Worten, sobald der Ventilkörper entgegen der Strömungsrichtung genügend weit bewegt wird, bis sich die Arretierelemente und die Elemente zum Zusammenwirken mit den Arretierelementen des Ventilkörpers in einer Ebene befinden, können diese durch den Rückstellmechanismus miteinander in Wirkverbindung gebracht werden, insbesondere automatisch. Entsprechend wird der Ventilkörper in seiner Ladeposition gehalten.

Vorzugsweise ist die Austrittsdüse mit einem Austrittsverschlusselement verschlossen.

Ein Eintritt von Schmutz oder Bakterien in den Innenraum oder Innenbereich der Vorrichtung kann zuverlässig verhindert werden.

Zudem ermöglicht der Verschluss ein Abdichten der Sprühstosskammer gegenüber der Umwelt. Das Fördern des Fluides in die Sprühstosskammer kann somit durch einen sich in der Sprühstosskammer bildenden Unterdruck verursacht werden. Mit anderen Worten, wird der Ventilkörper in der Ladeposition gehalten und der Düsenkörper von der Spannposition in die Abgabeposition bewegt und die Verbindung der Sprühstosskammer zur Austrittsdüse ist mit dem Dichtelement verschlossen, bildet sich in der Sprühstosskammer ein Unterdruck, durch welchen ein Fluid in die Sprühstosskammer gesaugt werden kann.

Das Austrittsverschlusselement kann ein federnd gelagertes Dichtelement, insbesondere einen Dichtzapfen, aufweisen.

Ein federnd gelagertes Dichtelement erlaubt es, dass bei einem bestimmten Flüssigkeitsdruck im Inneren der Vorrichtung, dieses eine entsprechende Öffnung, welche durch das Dichtelement verschlossen ist, freigibt.

Durch das Dichtelement ist ebenfalls sichergestellt, dass innerhalb der Vorrichtung ein entsprechender Unterdruck zum Füllen der Sprühstosskammer aufgebaut werden kann.

Durch die federnde Lagerung ist zudem sichergestellt, dass die Austrittsdüse erst ab einem bestimmten Druck innerhalb der Vorrichtung freigegeben wird.

Es kann vorgesehen sein, dass das Austrittsverschlusselement zumindest bereichsweise komprimierbar ist, insbesondere aus einem rückstellbar komprimierbaren Material gefertigt ist.

Durch das komprimierbare Material ist die federnde Lagerung des Dichtzapfens als integraler Bestandteil des Austrittsverschlusselementes bereitgestellt. Dies ermöglicht die einfache Fertigung des Austrittsverschlusselementes vorzugsweise als ein Bauteil.

Dabei kann vorgesehen sein, das Austrittsverschlusselement aus einem flexiblen Stoff wie Gummi oder einem komprimierbaren, insbesondere geschlossenporigen, Schaumstoff zu fertigen. Eine einstückige Fertigung eines Austrittsverschlusselementes welches über seine Länge in Strömungsrichtung unterschiedliche Eigenschaften aufweist, ist ebenfalls vorstellbar. So kann das Austrittsverschlusselement derart gefertigt sein, dass beispielsweise im Bereich des Dichtzapfens einen Schaumstoff mit geringerer Porengrösse aufweist, der kaum oder nur wenig komprimierbar ist, und in einem Bereich entfernt davon einen Schaumstoff, der mit grösseren Poren geschäumt ist und mehr komprimierbar ist.

Vorzugsweise ist der Ventilkörper der Vorrichtung stromaufwärts des Rückschlagventils mit einem Innenraum des Behälters verbunden oder verbindbar.

Der Inhalt des Behälters, vorzugsweise ein Fluid mit einem darin gelösten Medikament, kann über die Verbindung in den Ventilkörper und entsprechend in die sich zwischen dem Ventilkörper und dem Düsenkörper befindliche Sprühstosskammer gefördert werden.

Dabei kann vorgesehen sein, dass zum Verbinden mit dem Innenraum des Behälters ein Schlauch vorgesehen ist.

Ein Schlauch ermöglicht es, den Ventilkörper und/oder die Vorrichtung mit einem Punkt im Inneren des Behälters zu verbinden, der im gattungsgemässen Gebrauch im Wesentlichen am tiefsten ist. Dies ermöglicht das im Wesentlichen vollständige Entleeren des Behälters.

Vorzugsweise bildet der Ventilkörper stromaufwärts des Rückschlagventils eine grössenveränderliche Nachziehkammer.

Eine grössenveränderliche Nachziehkammer ermöglicht das vorgängige Bereitstellen einer Dosis oder eines entsprechenden Volumens eines Fluides.

Dabei kann vorgesehen sein, dass die Nachziehkammer ein entsprechend grosses Volumen aufweist, wenn sich der Ventilkörper in der Entladeposition befindet und ein entsprechend kleines Volumen, wenn sich der Ventilkörper in der Ladeposition befindet.

Mit anderen Worten, wird eine Dosis des Fluides durch das Bewegen oder Verschieben des Ventilkörpers von der Ladeposition in die Entladeposition aus der Vorrichtung abgegeben, kann bereits eine nächste Dosis eines Wirkstoffs in der Nachziehkammer bereitgestellt werden.

Die Nachziehkammer kann insbesondere mit dem Grundkörper zusammen gebildet sein.

Dies ermöglicht eine einfache und kostengünstige Fertigung. Zudem kann ein Bereich des Grundkörpers, der einen Teil der grössenveränderlichen Nachziehkammer bildet, gleichzeitig eine Auflage oder ein Widerlager für die Sprühstossfeder bereitstellen.

Zur Bildung der Nachziehkammer kann es vorgesehen sein, dass sowohl am Ventilkörper als auch am Grundkörper jeweils hohlzylindrische Elemente mit kreisförmigem Querschnitt ausgebildet sind, die ineinandergreifen, insbesondere verschieblich ineinander gelagert sind. Dabei kann es vorgesehen sein, dass diese hohlzylindrischen Elemente zusammen eine Spaltdichtung bilden. Ebenso ist es vorstellbar, dass zumindest an einem der beiden hohlzylindrischen Elemente eine Dichtung aus einem flexiblen Material, beispielsweise eine Lippendichtung, angeordnet ist, die die grössenveränderliche Nachziehkammer gegenüber ihrer Umgebung abdichtet. Eine Lippendichtung ist entsprechend derart ausgeführt, dass der Ventilkörper gegenüber dem Grundkörper verschiebbar ist.

Alternativ wäre es vorstellbar, dass die Nachziehkammer durch einen grössenveränderlichen Bereich der Verbindung zwischen dem Ventilkörper und dem Inneren des Behälters gebildet ist. Dieser grössenveränderliche Bereich könnte beispielsweise in der Form eines Faltenbalges als Teilabschnitt eines Schlauchs ausgebildet sein.

Durch das Bereitstellen einer Nachziehkammer ist es zudem ermöglicht, einen Schlauch oder eine Verbindung zwischen der Vorrichtung und dem Inneren des Behälters in Bezug auf den Behälter ortsfest zu platzieren. Ein Bewegen dieser Verbindung oder dieses Schlauchs relativ zum Behälter ist damit verhindert. Dies begünstigt ein vollständigeres Entleeren des Behälters.

Die Nachziehkammer kann das Befüllen der Sprühstosskammer unterstützen. So ist es beispielsweise vorstellbar, dass sich am Behälter oder in der Vorrichtung ein Rückschlagventil befindet, dass lediglich einen Gasaustausch in den Behälter hinein erlaubt. Sofern nun ein Fluidvolumen in die Nachziehkammer befördert wird entsteht im Behälter ein Unterdruck, der durch das vorgenannte Rückschlagventil ausgeglichen wird. Wird nun jedoch der Ventilkörper von der Entladeposition in der Ladeposition bewegt, so verringert sich das Gesamtvolumen bestehend aus dem Volumen innerhalb des Behälters und dem Nachziehvolumen. Innerhalb dieser beiden Volumina entsteht nun ein Überdruck, der das Fördern des Fluids in die Sprühstosskammer durch den sich in der Sprühstosskammer aufbauenden Unterdruck begünstigt. Die Druckdifferenz zwischen der Sprühstosskammer und den Volumina der Nachziehkammer und des Behälters vergrössert sich, was die Förderung des Fluides in die Sprühstosskammer begünstigt.

Vorstellbar ist jedoch auch eine direkte Verbindung eines Innenraums des Behälters mit seiner Umgebung mittels einer Öffnung, welche vorzugsweise mit einer keimundurchlässigen Vorrichtung wie einer Membran ausgestattet ist. Solche keimundurchlässigen Vorrichtungen sind als bakteriendichte Ventile bekannt.

Ein weiterer Aspekt der Erfindung betrifft einen Sprühapplikator zur Abgabe eines Wirkstoffs, insbesondere ein Nasenspray. Der Sprühapplikator umfasst einen Behälter, an welchem eine wie vorliegend beschriebene Vorrichtung angeordnet ist.

Dies erlaubt das Bereitstellen eines Medikamentes in einer abgabefertigen Verpackung.

Der Sprühapplikator oder die Vorrichtung kann derart ausgebildet sein, dass der Inhalt des Behälters zur Umgebung mit einem bakteriendichten Ventil verschlossen ist. Dazu kann das bakteriendichte Ventil im Behälter oder in der Vorrichtung ausgebildet sein und vorzugsweise einen Gasaustausch lediglich in einer Richtung, vorliegend in Richtung des Innenraums des Behälters, ermöglichen.

Dies verhindert einen unzulässig werdenden Unterdruck im Behälter.

Anhand von schematischen Figuren welche lediglich einzelne von mehreren möglichen Ausführungsformen zeigen, wir die Erfindung im Folgenden näher erläutert. Es zeigen:
- Figur 1:: Eine perspektivische Ansicht eines Sprühapplikators;
- Figur 2:: Einen Querschnitt durch den Sprühapplikator aus der Figur 1
- Figur 3:: Den Querschnitt aus Figur 2 mit dem Sprühapplikator in einer ersten Position;
- Figur 4:: Den Querschnitt aus Figur 2 mit dem Sprühapplikator in einer zweiten Position;
- Figur 5:: Den Querschnitt aus Figur 2 mit dem Sprühapplikator in einer dritten Position;
- Figur 6:: Den Querschnitt aus Figur 2 mit dem Sprühapplikator in einer vierten Position;
- Figur 7:: Einen Querschnitt durch den Auslösemechanismus des Sprühapplikators aus der Figur 2 in einer ersten Position;
- Figur 8:: Einen Querschnitt durch den Auslösemechanismus des Sprühapplikators aus der Figur 2 in einer zweiten Position;
- Figur 9:: Einen Sprühapplikator mit einer alternativen Ausführungsform einer Vorrichtung zur Abgabe einer Flüssigkeit.

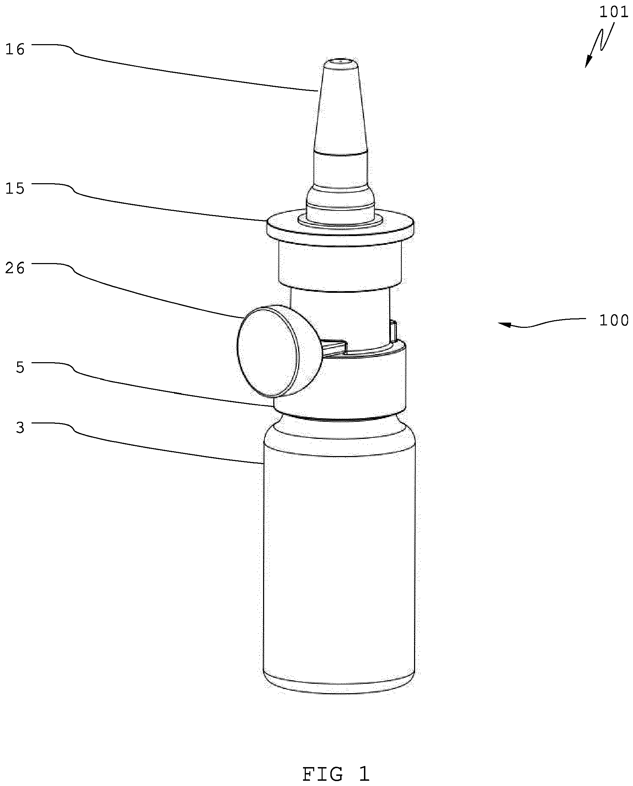

Die Figur 1 zeigt eine perspektivische Ansicht eines Sprühapplikators 101 der vorliegend als Nasenspray ausgebildet ist. Der Sprühapplikator 101 weist einen Behälter 3 und eine Vorrichtung 100 zur Abgabe einer Flüssigkeit aus dem Behälter 3 auf. An der Vorrichtung 100 zur Abgabe der Flüssigkeit sichtbar ist ein Düsenkörper 16, an dem ein Betätigungselement 15 angeordnet ist. Seitlich an der Vorrichtung 100 angeordnet ist ein Auslösemechanismus 26. Die Vorrichtung 100 weist zudem einen Grundkörper 5 auf. Die Vorrichtung 100 ist mit dem Grundkörper 5 an dem Behälter 3 befestigt und vorliegend mit diesem verschraubt.

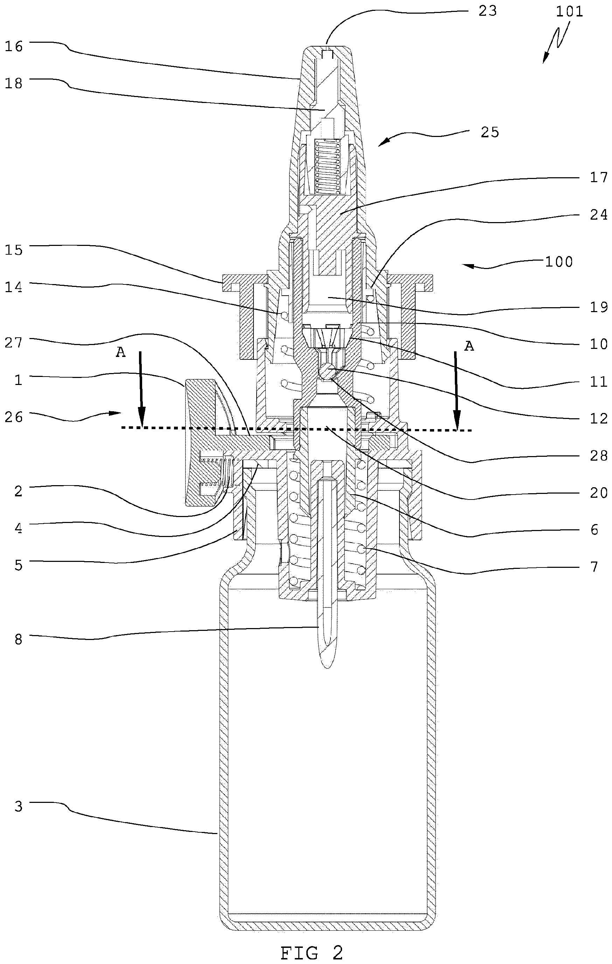

Die Figur 2 zeigt einen Querschnitt durch den Sprühapplikator 101 aus der Figur 1. Die Vorrichtung 100, die am Sprühapplikator 101 angeordnet ist, umfasst einen Grundkörper 5 und einen Düsenkörper 16. Der Düsenkörper 16 ist axial verschieblich im Grundkörper 5 gelagert. Dazu weist der Düsenkörper 16 und der Grundkörper 5 im Wesentlichen kreisförmige und hohlzylindrische Elemente auf, die ineinandergreifen. Das holzylindrische Element des Düsenkörpers 16 weist Nasen auf, die in einen vorstehenden Ring am Grundkörper 5 eingreifen, sodass der Düsenkörper 16 unverlierbar im Grundkörper 5 gehalten ist und in Bezug auf seine axiale Lage relativ zum Grundkörper 5 eine definierte Position einnimmt sobald die Nasen und der vorstehende Ring ineinandergreifen. Diese Position entspricht einer Abgabeposition, mit anderen Worten, der Position, die der Düsenkörper 16 während der Abgabe der Flüssigkeit aufweist. Der Düsenkörper 16 ist vorliegend als Nasenkappe ausgebildet.

Der Düsenkörper 16 bildet gemeinsam mit dem Grundkörper 5 einen Innenraum, in welchem eine Rückstellfeder 14 angeordnet ist. Diese Rückstellfeder 14 hält den Düsenkörper 16 in der obengenannten definierten Position. Die Rückstellfeder 14 ist als Schraubenfeder ausgebildet.

Der Grundkörper 5 ist an einem Behälter 3 befestigt. Vorliegend ist diese Befestigung als Schnappverbindung ausgebildet. Zwischen dem Grundkörper 5 und dem Behälter 3 ist eine Flaschendichtung 4 angeordnet um den Behälter 3 gegenüber der Umgebung abzudichten. Die Flaschendichtung 4 ist als flexible Flachdichtung ausgebildet.

Zum Verschieben des Düsenkörpers 16 ist an diesem ein Betätigungselement 15 angeordnet, das vorliegend als separater Betätigungsring ausgebildet. Durch Drücken auf das Betätigungselement 15 lässt sich der Düsenkörper 16 entgegen einer Kraft der Rückstellfeder 14 in axialer Richtung in Richtung des Behälters 3 verschieben.

Innerhalb des Grundkörpers 5 ist ein Ventilkörper 10 angeordnet. Der Ventilkörper 10 ist axial verschieblich gelagert. Gemeinsam mit dem Düsenkörper 16 bildet der Ventilkörper 10 eine Sprühstosskammer 19. Dazu weist der Ventilkörper 10 ein kreisförmiges, holzylindrisches Element auf in welches ein im Wesentlichen komplementäres Element des Düsenkörpers 16 eingreift. Dieses ist vorliegend ebenfalls hohlzylindrisch ausgebildet. Zudem ist dieses komplementäre Element des Düsenkörpers 16 an einer separat ausgebildeten Sprühstossführung 17 angeordnet, die Teil des Düsenkörpers 16 ist und vorliegend zudem eine Doppelfunktion ausführt, auf die nachfolgend noch eingegangen wird.

Zur Abdichtung der Sprühstosskammer 19 ist zwischen dem hohlzylindrischen Element des Ventilkörpers 10 und dem komplementären Element des Düsenkörpers 16 eine Spaltdichtung ausgebildet. Eine Lippendichtung kann ebenfalls vorgesehen sein.

Zudem ist zur besseren Führung des Ventilkörpers 10 eine Gleitführung 24 im Düsenkörper 16 angeordnet.

Im Grundkörper 5 ist zudem eine Sprühstossfeder 7 angeordnet, welche auf den Ventilkörper 10 einwirkt, sodass dieser in einer definierten Position gehalten ist. Die Sprühstossfeder 7 ist vorliegend derart zwischen dem Grundkörper 5 und dem Ventilkörper 10 angeordnet, dass der Ventilkörper 10 durch die Federkraft in Strömungsrichtung bewegt wird. Die Sprühstossfeder 7 ist als Schraubenfeder ausgebildet. In der Figur 2 ist der Sprühstosskörper 10 durch die Sprühstossfeder 7 in der Entladeposition gehalten, das heisst in einer Position, in welcher die Flüssigkeit oder das Fluid entladen ist. Die Sprühstosskammer 19 weist in dieser Konfiguration ein minimales Volumen auf.

Innerhalb des Ventilkörpers 10 ist ein Rückschlagventil 28 angeordnet. Dieses ist vorliegend als Kugelrückschlagventil ausgebildet und weist eine Kugel 12 auf, die mit einem entsprechenden Halteelement 11 in einem Passsitz gehalten ist. Das Rückschlagventil 28 dichtet die Sprühstosskammer 19 gegenüber der Umgebung und vorliegend gegenüber einem Innenraum des Behälters 3 ab.

Am, in der Figur 2 oberen, Ende des Düsenkörpers 16 befindet sich eine Austrittsdüse 23. Die Verbindung zwischen dem Behälter 3 und der Austrittsdüse 23 definiert die Strömungsrichtung des abzugebenden Fluides, welches sich im Behälter 3 befindet. Vorliegend sind sämtliche Elemente entlang einer Achse angeordnet, die sich vom Boden des Behälters 3 durch die Austrittsöffnung 23 erstreckt und welche die axiale Richtung definiert.

Die Austrittsdüse 23 befindet sich somit stromabwärts des Rückschlagventils 28 und der Behälter 3 befindet sich stromaufwärts des Rückschlagventils 28.

Die Austrittsdüse 23 ist mit einem Düsenverschluss 18 verschlossen, der im Bereich der Austrittsdüse 23 einen Dichtzapfen aufweist. Innerhalb des Düsenverschlusses 18 ist ein nicht näher bezeichnetes federndes Element angeordnet, welches den Dichtzapfen in seiner hier gezeigten Lage hält. Die Sprühstossführung 17 dient hier in ihrer Doppelfunktion als Widerlager für das federnde Element. Der Düsenverschluss 18 bildet gemeinsam mit dem federnden Element das Austrittsverschlusselement 25.

Innerhalb der Sprühstossführung 17 ist ein nicht näher bezeichneter Kanal angeordnet, der die Sprühstosskammer 19 mit einem Ringspalt zwischen der Sprühstossführung 17 und dem Düsenkörper 16 verbindet. Sobald in der Sprühstosskammer 19 ein Druck aufgebaut wird, wird Flüssigkeit in den Ringspalt gefördert, wo sich wiederum ein Druck aufbaut. Dieser Druck pflanzt sich fort und wirkt auf entsprechende Flächen am Düsenverschluss 18 und verdrängt diesen in Richtung des Behälters 3, und damit entgegen der Strömungsrichtung der Flüssigkeit. Diese Bewegung erfolgt entgegen einer Federkraft des federnden Elementes, das vorliegend als Schraubenfeder ausgebildet ist. Durch diese Bewegung wird der Dichtzapfen aus der Austrittsöffnung 23 hinausbewegt und die Austrittsöffnung 23 ist somit freigegeben. Die sich in der Sprühstosskammer 19 befindliche Flüssigkeit kann also, solange der Druck aufrechterhalten wird, aus der Austrittsöffnung 23 abgegeben werden.

Der Ventilkörper 10 bildet zusammen mit dem Grundkörper 5 eine Nachziehkammer 20. Dazu weist der Ventilkörper 10 ein kreisförmiges, holzylindrisches Element auf in welches ein im Wesentlichen komplementäres Element des Grundkörpers 3 eingreift. Dieses ist vorliegend ebenfalls hohlzylindrisch ausgebildet. Zwischen diesem komplementären Element des Grundkörpers 5 und dem hohlzylindrischen Element des Ventilkörpers 10 ist ein separat ausgebildeter Dichtkörper 6 angeordnet, der die Nachziehkammer 20 gegenüber ihrer Umgebung abdichtet.

Es ist jedoch vorstellbar, den Dichtkörper 6 wegzulassen und den Ventilkörper 10 entsprechend auszubilden, sodass dieser gemeinsam mit dem Grundkörper 5 eine Spaltdichtung bildet, oder zwischen dem Ventilkörper 10 und dem Grundkörper 5 zum Abdichten der Nachziehkammer 20 eine Lippendichtung vorzusehen.

Im Grundkörper 5 eingebracht ist eine Verbindung in den Innenraum des Behälters 3 die vorliegend als Schlauch 8 ausgebildet ist.

Die Vorrichtung 100 weist einen Auslösemechanismus 26 auf der im Wesentlichen seitlich an der Vorrichtung 100 angeordnet ist. Der Auslösemechanismus 26 weist einen Druckknopf 1 auf und ein Betätigungselement 27, welches sich in die Vorrichtung 100 hinein erstreckt und den Ventilkörper 10 umfasst. Das Betätigungselement 27 und der Druckknopf 1 sind vorliegend einstückig gefertigt. Am Auslösemechanismus 26 ist zudem eine Feder 2 angeordnet, die das Halteelement 27 in einer Endlage hält. Die Endlage entspricht einer Stellung, in welcher das Halteelement 27 in Bezug zur Längsachse der Vorrichtung 100 radial nach aussen bewegt ist, sodass zum Auslösen der Druckknopf 1 in Richtung der Längsachse bewegt werden muss.

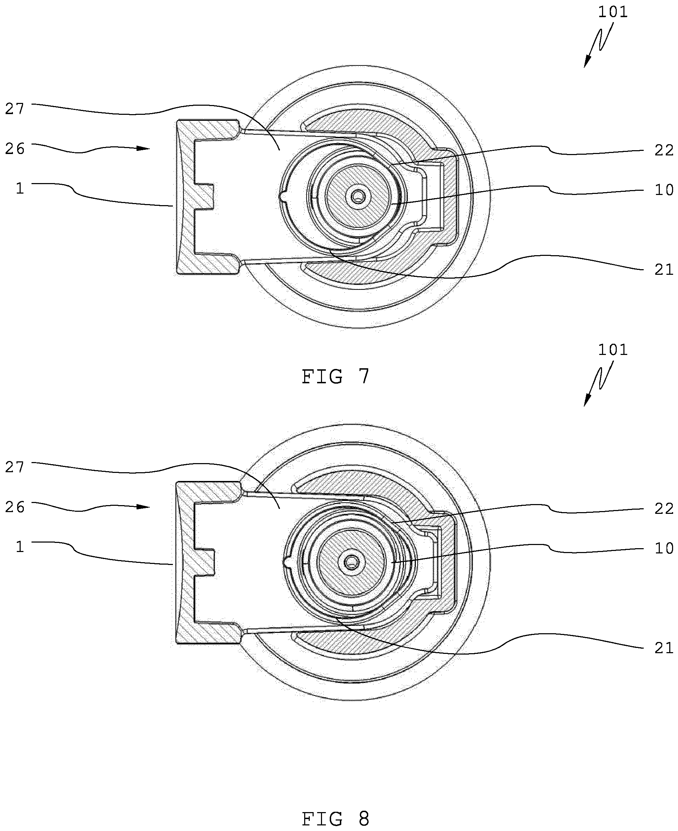

Das Halteelement 27 weist eine Öffnung mit einem Arretierelement 22 (siehe Figur 7 oder 8) auf, welches in Eingriff mit einem entsprechenden Element am Ventilkörper 10 bringbar ist. Dieses Element ist vorliegend als umlaufende Schulter am Ventilkörper 10 ausgebildet.

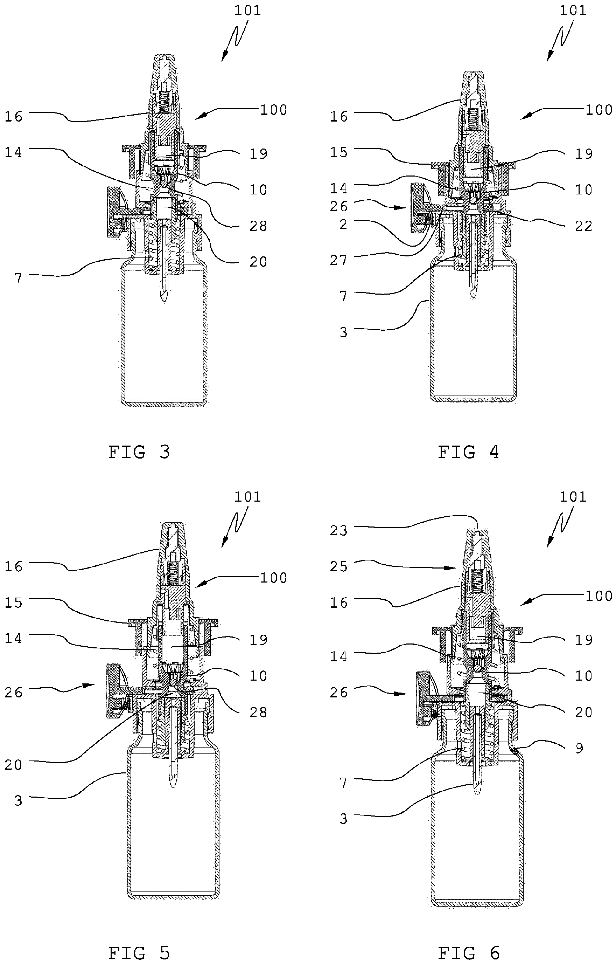

Unter Bezugnahme auf die Figuren 3 bis 8 wird nachfolgend die Funktion des Sprühapplikators 101 erläutert. Die Figuren 3 bis 6 zeigen jeweils die Schnittansicht des Sprühapplikators 101 gemäss der Figur 2 wobei einzelne Bauteile in unterschiedlichen Positionen dargestellt sind.

Die Figur 3 zeigt den Sprühapplikator 101 in einem unbelasteten Zustand, entsprechend der Darstellung gemäss der Figur 2. Die Rückstellfeder 14 hält den Düsenkörper 16 in seiner Abgabeposition, das heisst, der Düsenkörper 16 hat eine Position, in welcher die Flüssigkeit aus dem Düsenkörper 16 abgegeben werden kann. Die Sprühstossfeder 7 hält den Ventilkörper 10 in der Entladeposition, das heisst, in der Position, in welcher die Flüssigkeit aus der Vorrichtung 100, respektive aus dem Sprühapplikator 101 abgegeben, also entladen wurde. Der Ventilkörper 10 bildet zusammen mit dem Düsenkörper 16 eine Sprühstosskammer 19, die in dieser Position ein kleines Volumen aufweist. Der Düsenkörper 16 befindet sich in Figur 3 in der Abgabeposition, der Ventilkörper 10 in der Entladeposition.

Die Figur 4 zeigt den Sprühapplikator 101 in einem betätigten Zustand. Zum Betätigen drückt der Benutzer das Betätigungselement 15 in Richtung des Behälters 3. Durch das Verschieben des Betätigungselements 15 wird ebenfalls der Düsenkörper 16 in Richtung des Behälters 3 verschoben. Dabei wird die Rückstellfeder 14 zusammengedrückt. Mit anderen Worten, der Düsenkörper 16 wird entgegen der Federkraft der Rückstellfeder 14 betätigt. Beim Verschieben des Düsenkörpers 16 gelangt dieser in Eingriff mit dem Ventilkörper 10. Der Ventilkörper 10 wird somit ebenfalls in Richtung des Behälters 3 bewegt. Dabei wird die Sprühstossfeder 7 zusammengedrückt. Mit anderen Worten, der Ventilkörper 10 wird entgegen der Federkraft der Sprühstossfeder 7 betätigt.

Durch das Betätigen des Betätigungselementes 15 wird also gleichzeitig die Rückstellfeder 14 und die Sprühstossfeder 7 vorgespannt. Der Düsenkörper 16 befindet sich in Figur 4 in der Spannposition.

Der Ventilkörper 10 ist in der Figur 4 bereits so weit in Richtung der Behälters 3 verschoben, dass ein Arretierelement 22 (siehe auch Figur 7) des Halteelementes 27 des Auslösemechanismus 26 in Eingriff mit einem entsprechenden Element am Ventilkörper 10 ist. Dabei wurde das Halteelement 27 durch die Federkraft der Feder 2 in Bezug zum Düsenkörper 16 radial nach aussen bewegt, derart, dass das Arretierelement 22 den Ventilkörper 10 entgegen der Federkraft der Sprühstossfeder 7 arretiert. Der Ventilkörper 10 befindet sich nun in der Ladeposition, also in der Position, in der die Vorrichtung 100 geladen werden kann.

In der Lage gemäss der Figur 4, in welcher sich der Düsenkörper 16 in der Spannposition befindet und sich der Ventilkörper 10 in der Ladeposition befindet, hat sich des Volumen der Sprühstosskammer 19 gegenüber der Lage gemäss der Figur 3 nicht oder nur unwesentlich verändert.

Die Figur 5 zeigt den Sprühapplikator 101 in einem geladenen Zustand. Der Benutzer hat, nachdem der Ventilkörper 10 durch den Auslösemechanismus 26 in der Ladeposition gehalten ist, das Betätigungselement 15 entlastet. Durch die Federkraft der Rückstellfeder 14 ist der Düsenkörper 16 zurück in die Abgabeposition bewegt worden. Diese Bewegung hat gleichzeitig eine Vergrösserung des Volumens der Sprühstosskammer 19 verursacht. Durch diese Vergrösserung ist in der Sprühstosskammer 19 ein Unterdruck entstanden, durch den eine Flüssigkeit aus dem Behälter 3 in die Sprühstosskammer 19 gesaugt worden ist. Dabei hat die Flüssigkeit das Rückschlagventil 28 passiert. Diese federunterstützte Bewegung sorgt dafür, dass jeder Ladevorgang gleich durchgeführt wird, sobald der Benutzer das Betätigungselement 15 loslässt.

Dies ermöglicht einerseits, dass der Benutzer den Sprühapplikator 101 lädt oder laden kann, bevor er zur Anwendung kommt, beispielsweise bei einem Nasenspray, wie vorliegen beschrieben, bevor dieser in eine Nasenhöhle eingebracht wird. Zudem ist es ermöglicht, den Sprühapplikator 101 beidhändig oder mit einem Hilfsmittel zu bedienen. Ausserdem kann der Sprühapplikator 101 vorgespannt gelagert werden.

Zur Abgabe dieses Volumens an Flüssigkeit, welches sich im der Sprühstosskammer 19 befindet, wird der Auslösemechanismus 26 betätigt. Die Figur 6 zeigt den Zustand nach dem Auslösen. Durch das Betätigen des Auslösemechanismus 26 wird der Ventilkörper 10 freigegeben. Die Sprühstossfeder 7 bewegt den Ventilkörper in Strömungsrichtung in Richtung zur Austrittsöffnung 23 hin. In der Sprühstosskammer 19 entsteht ein Überdruck, der sich zur Austrittsöffnung 23 hin fortpflanzt. Durch diesen Überdruck wird das Austrittsverschlusselement 25 zusammengedrückt, sodass dieses die Austrittsöffnung 23 freigibt und die Flüssigkeit aus der Sprühstosskammer 19 in der Form eines Sprühnebels aus der Austrittsöffnung 23 entweichen kann. Während der Abgabe des Sprühnebels verändert der Düsenkörper 16 seine Lage nicht, mit anderen Worten, er verbleibt in der Abgabeposition. Nach dem Betätigen des Auslösemechanismus 26 und der Abgabe des Sprühnebels befindet sich der Sprühapplikator 101 wieder in seiner ursprünglichen Lage gemäss der Figur 3.

Der Sprühstoss ist durch die Sprühstossfeder 7 immer gleich stark.

Stromaufwärts des Rückschlagventils 28 befindet sich eine grössenveränderliche Nachziehkammer 20 (siehe Figur 3). In der Lage gemäss der Figur 5 weist diese ein erstes, kleines Volumen auf. Währen des Auslösens des Sprühapplikators 101 (von der Position gemäss der Figur 5 nach der Position gemäss der Figur 6) wird durch das Bewegen des Ventilkörpers 10 in Richtung zur Austrittsöffnung 23 hin eine Vergrösserung der Nachziehkammer 20 verursacht. Dies hat zur Folge, dass innerhalb der Nachziehkammer 20 ein Unterdruck erzeugt wird. Durch diesen Unterdruck wird eine Dosis der Flüssigkeit, die sich im Behälter 3 befindet, in die Nachziehkammer 20 gefördert. Um einen Unterdruck im Behälter 3 zu vermeiden oder zu verhindern, ist ein bakteriendichtes, gasdurchlässiges Ventil 9 vorgesehen, das vorliegend in einer Wandung des Behälters 3 angeordnet ist.

Das bakteriendichte Ventil 9 kann als Rückschlagventil ausgebildet sein. Beim Laden des Sprühapplikators 101 (Schritte gemäss der Figur 4) wird die Dosis der Flüssigkeit, die sich in der Nachziehkammer 20 befindet zurück in den Behälter 3 gefördert und baut, da aus dem Behälter 3 keine Luft entweichen kann, einen Überdruck auf. Dieser Überdruck unterstützt das Füllen der Sprühstosskammer 19 nach dem Loslassen des Betätigungselementes 15.

Diese Nachziehkammer 20 hat zudem den Vorteil, dass ein Schlauch 8, der sich von der Vorrichtung 100 in den Behälter 3 erstreckt, nicht bewegt, also in Bezug zum Behälter 3 eine gleichbleibende Position aufweist.

Die Figuren 7 und 8 zeigen je einen Querschnitt durch den Auslösemechanismus 26 des Sprühapplikators 101 aus der Figur 1 in einer ersten und zweiten Position entlang der Schnittlinie A-A aus der Figur 2. Der Auslösemechanismus 26 umfasst einen Druckknopf 1 und ein Halteelement 27, wobei der Druckknopf 1 und das Halteelement 27 einstückig gefertigt sind. Im Halteelement 27 ist eine Öffnung angeordnet, die zwei unterschiedliche Querschnitte aufweist. Diese Querschnitte sind in der Form von zwei ineinandergreifenden Kreisöffnungen unterschiedlichen Durchmessers ausgebildet. Die kleinere der beiden Kreisöffnungen stellt ein Arretierelement 22 bereit. Durch die Ausbildung als Kreisöffnung wirkt das Arretierelement 22 an mehreren Bereichen mit dem Ventilkörper 10 zusammen, vorliegend auf zwei Seiten und über einen Bereich von etwa 100° um den Ventilkörper 10 herum. Das Arretierelement 22 umfasst den Ventilkörper 10 bereichsweise. Die Figur 7 zeigt die Lage gemäss der Figur 4, in welcher das Halteelement 27 im Eingriff mit dem Ventilelement 10 ist und dieses in der Ladeposition hält. Die Figur 8 zeigt eine Lage nach dem Betätigen des Auslösemechanismus 26. Dazu wurde der Druckknopf 1 betätigt und das Halteelement 26 in, in Bezug zum Ventilkörper 10, radialer Richtung verschoben, so, dass das Halteelement 27 den Ventilkörper 10 freigegeben hat.

Zum Zusammenbau der Vorrichtung 100 wird das Halteelement noch weiter radial bewegt, und der Düsenkörper 16 (siehe bspw. Figur 2) in Richtung zum Behälter 3 hin, in die Vorrichtung 100 durch die Öffnung im Halteelement 27 im Bereich der grösseren Kreisöffnung 21 eingebracht.

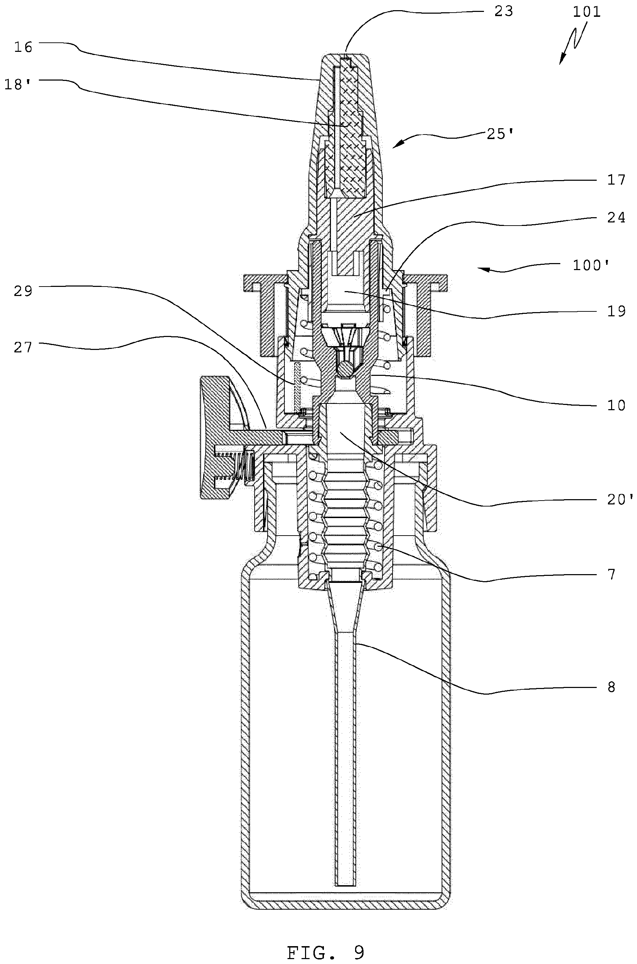

Die Figur 9 zeigt einen Sprühapplikator 101 mit einer alternativen Ausführungsform einer Vorrichtung 100' zur dosierten Abgabe einer Flüssigkeit in einer Ansicht gemäss der Figur 2. Vorliegend sind lediglich die Elemente bezeichnet und beschrieben, die sich von der Ausführungsform gemäss der Figur 2 unterscheiden oder zur Beschreibung der Funktion unmittelbar notwendig sind. Die restlichen Elemente entsprechen jenen der Ausführungsform gemäss der Figur 2 und entsprechend wird auf die Figurenbeschreibung der Figur 2 verwiesen.

Die Austrittsdüse 23 ist mit einem Düsenverschluss 18' verschlossen, der im Bereich der Austrittsdüse einen Dichtzapfen aufweist. Der Düsenverschlusses 18' ist vorliegend aus einem geschlossenporigen Schaumstoff gebildet. Damit ist der Düsenverschluss 18' komprimierbar und bildet selbst ein federndes Element, welches den Dichtzapfen in seiner hier gezeigten Lage hält. Die Sprühstossführung 17 dient hier in ihrer Doppelfunktion als Widerlager für den Düsenverschluss 18'. Der Düsenverschluss 18' bildet das Austrittsverschlusselement 25`.

Innerhalb der Sprühstossführung 17 ist ein nicht näher bezeichneter Kanal angeordnet, der in einen sich durch den Düsenversschluss 18' erstreckenden, nicht näher bezeichneten Kanal, mündet. Dieser Kanal des Düsenverschlusses 18' mündet wiederum in einen Ringspalt zwischen dem Düsenverschluss 18' und dem Düsenkörper 16. Sobald in der Sprühstosskammer 19 ein Druck aufgebaut wird, wird Flüssigkeit in den Ringspalt gefördert, wo sich wiederum ein Druck aufbaut. Dieser Druck pflanzt sich fort und wirkt auf entsprechende Flächen am Düsenverschluss 18' und komprimiert diesen in Richtung des Behälters, respektive entgegen der Strömungsrichtung der Flüssigkeit. Durch diese Komprimierung wird der Dichtzapfen aus der Austrittsöffnung 23 hinausbewegt und die Austrittsöffnung 23 ist somit freigegeben. Die sich in der Sprühstosskammer 19 befindliche Flüssigkeit kann also, solange der Druck aufrechterhalten wird, aus der Austrittsöffnung 23 abgegeben werden.

Das vorliegend beschriebene Austrittsverschlusselement 25` kann in der Vorrichtung 100 gemäss der Figur 2 eingesetzt werden, unabhängig der Ausbildung der Nachziehkammer 20`.

Die Vorrichtung 100` des Sprühapplikators 101 gemäss der Figur 9 weist zudem eine alternative Ausführungsform der Nachziehkammer 20' auf. Die Nachziehkammer 20' ist als grössenveränderlicher Faltenbalg ausgebildet und vorliegend einstückig mit dem Schlauch gefertigt. Sie könnte jedoch auch separat gefertigt sein und mit dem Schlauch 8 beispielsweise über eine Pressverbindung verbunden sein. Der Faltenbalg ist über eine nicht näher bezeichnete Schnappverbindung mit dem Ventilkörper 10' verbunden, der entsprechend ausgebildete Anschlusselemente aufweist. Ein separater Dichtkörper, der den Flüssigkeitsstrom zur Sprühstossfeder 7 abdichtet, ist in dieser Ausführungsform nicht notwendig.

Das vorliegend beschriebene Nachziehkammer 20' kann in der Vorrichtung 100 gemäss der Figur 2 eingesetzt werden, unabhängig der Ausbildung Austrittsverschlusselementes 25`.

Die Vorrichtung 100` des Sprühapplikators 101 gemäss der Figur 9 weist zudem ein in allen Ausführungsformen optionales Sperrelement 29 auf. Dieses Sperrelement 29 ist mit einer nicht näher gezeigten Verbindung am Halteelement 27 angeordnet.

Das Sperrelement 29 ist in Bezug auf die Längsachse der Vorrichtung 100` flexibel sodass es beim Betätigen des Düsenkörpers 16 entlang einer Innenfläche des Düsenkörpers 16 gleiten kann.

Ist der Düsenkörper 16 in der Spannposition und damit der Ventilkörper 10 in der Ladeposition, bewegt sich das Haltelementes 27 in Bezug auf die Längsachse radial nach aussen. Entsprechend wird das Sperrelement 29 ebenfalls verschoben. Da es flexibel ist, biegt sich ein freies Ende des Sperrelementes 29 nach innen. Wird der Düsenkörper 16 nun losgelassen, biegt sich das Sperrelement 16 radial nach aussen und greift mit einem entsprechenden Vorsprung oder Element des Düsenkörpers 16 zusammen.

## Patentansprüche

1. Vorrichtung (100, 100') zur dosierten Abgabe einer Flüssigkeit aus einem Behälter (3), insbesondere zur Abgabe eines Sprühnebels, umfassend,
einen Grundkörper (5) zum Befestigen an dem Behälter (3),
einen Düsenkörper (16) mit einer Austrittsdüse (23), wobei der Düsenkörper (16) in Bezug zum Grundkörper (5) von einer Abgabeposition in eine Spannposition verschiebbar gelagert ist,
eine Rückstellfeder (14) zum Bewegen des Düsenkörpers (16) von der Spannposition in die Abgabeposition,
einen Ventilkörper (10) der in Bezug auf den Grundkörper (5) von einer Ladeposition in eine Entladeposition verschiebbar gelagert ist,
wobei im Ventilkörper (10) ein Rückschlagventil (28) angeordnet ist und
wobei der Ventilkörper (10) mit dem Düsenkörper (16) eine grössenveränderliche Sprühstosskammer (19) bildet, wobei die Sprühstosskammer (19) mit der Austrittsdüse (23) verbunden ist.

2. Vorrichtung (100, 100') nach Anspruch 1, **dadurch gekennzeichnet, dass** die Vorrichtung eine Sprühstossfeder (7) aufweist zum Bewegen des Ventilkörpers (10) von der Ladeposition in die Entladeposition.

3. Vorrichtung (100, 100') nach Anspruch 1 oder 2, **dadurch gekennzeichnet, dass** die Vorrichtung ein Betätigungselement (15), vorzugsweise einen Druckring, aufweist, wobei das Betätigungselement (15) am Düsenkörper (16) angeordnet ist.

4. Vorrichtung (100, 100') nach einem der Ansprüche 1 bis 3, **dadurch gekennzeichnet, dass** der Düsenköper (16) derart mit dem Ventilkörper (10) in Wirkverbindung ist oder bringbar ist, dass ein Verschieben des Düsenkörpers (16) von der Abgabeposition in die Spannposition ein Verschieben des Ventilkörpers (10) von der Entladeposition in die Ladeposition verursacht.

5. Vorrichtung (100, 100') nach einem der Ansprüche 1 bis 4, **dadurch gekennzeichnet, dass** die Vorrichtung einen Auslösemechanismus (26) aufweist, zum Halten des Ventilkörpers (10) in der Ladeposition.

6. Vorrichtung (100, 100') nach Anspruch 5, **dadurch gekennzeichnet, dass** in der Ladeposition des Ventilkörpers (10) ein Verschieben des Düsenkörpers (16) von der Abgabeposition in die Spannposition eine Verkleinerung des Volumens der Sprühstosskammer (19) bewirkt.

7. Vorrichtung (100, 100') nach Anspruch 5, **dadurch gekennzeichnet, dass** die Vorrichtung (100, 100') ein Sperrelement aufweist, das derart angeordnet ist, dass ein Verschieben des Düsenkörpers (16) von der Abgabeposition in die Spannposition verhindert ist, wenn sich der Ventilkörper (10) in der Ladeposition befindet.

8. Vorrichtung (100, 100') nach einem der Ansprüche 5 bis 7, **dadurch gekennzeichnet, dass** der Auslösemechanismus (26) ein Halteelement (27) aufweist und seitlich des Ventilkörpers (10) angeordnet ist und insbesondere quer zu einer Strömungsrichtung der Flüssigkeit durch den Ventilkörper (10) betätigbar ist, wobei vorzugsweise das Halteelement (27) den Ventilkörper zumindest bereichsweise, insbesondere auf zwei Seiten umfasst, vorzugsweise vollständig umfasst.

9. Vorrichtung (100, 100') nach Anspruch 8, **dadurch gekennzeichnet, dass** das Halteelement (27) eine Öffnung mit zumindest einem Arretierelement (22) aufweist, wobei die Öffnung vorzugsweise zwei unterschiedliche Querschnitte aufweist, wobei die Öffnung insbesondere als zwei ineinandergreifende Kreisöffnungen unterschiedlichen Durchmessers ausgebildet sind.

10. Vorrichtung (100, 100') nach einem der Ansprüche 8 oder 9, **dadurch gekennzeichnet, dass** am Auslösemechanismus eine Rückstellvorrichtung, insbesondere eine Feder (2), zum Halten des Halteelementes (27) in einer Endlage angeordnet ist.

11. Vorrichtung (100, 100') nach einem der Ansprüche 1 bis 10, **dadurch gekennzeichnet, dass** die Austrittsdüse (23) mit einem Austrittsverschlusselement (25, 25') verschlossen ist, wobei das Austrittsverschlusselement (25, 25') vorzugsweise ein federnd gelagertes Dichtelement, insbesondere einen Dichtzapfen, aufweist.

12. Vorrichtung (100, 100') nach Anspruch 11, **dadurch gekennzeichnet, dass** das Austrittsverschlusselement (25, 25') zumindest bereichsweise komprimierbar ist, insbesondere aus einem komprimierbaren Material gefertigt ist.

13. Vorrichtung (100, 100') nach einem der Ansprüche 1 bis 12, **dadurch gekennzeichnet, dass** der Ventilkörper (10) stromaufwärts des Rückschlagventils (28) mit einem Innenraum des Behälters (3) verbunden oder verbindbar ist.

14. Vorrichtung (100, 100') nach einem der Ansprüche 1 bis 13, **dadurch gekennzeichnet, dass** der Ventilkörper (10) stromaufwärts des Rückschlagventils (28), insbesondere mit dem Grundkörper (5), eine grössenveränderliche Nachziehkammer (20, 20') bildet.

15. Sprühapplikator (101) zur Abgabe eines Wirkstoffs, insbesondere Nasenspray, umfassend einen Behälter (3), an welchem eine Vorrichtung (100, 100') nach einem der Ansprüche 1 bis 14 angeordnet ist, wobei vorzugsweise der Inhalt des Behälters (3) zur Umgebung mit einem bakteriendichten Ventil (28) verschlossen ist.

## Claims

1. A device (100, 100') for the metered dispensing of a liquid out of a container (3), in particular for dispensing a spray mist, comprising
a main body (5) for fastening to the container (3), a nozzle body (16) with an outlet nozzle (23), wherein the nozzle body (16) with respect to the main body (5) is displaceably mounted from a dispensing position into a loaded position,
a restoring spring (15) for moving the nozzle body (16) from the loaded position into the dispensing position,
a valve body (10) which with regard to the main body (5) is displaceably mounted from a charging position into a discharging position,
wherein a non-return valve (28) is arranged in the valve body (10) and
wherein the valve body (10) with the nozzle body (16) forms a size-variable spray burst chamber (19), wherein the spray burst chamber (19) is connected to the outlet nozzle (23).

2. A device (100, 100') according to claim 1, **characterised in that** the device comprises a spray burst spring (7) for moving the valve body (10) from the charging position into the discharging position.

3. A device (100, 100') according to claim 1 or 2, **characterised in that** the device comprises an actuation element (15), preferably a press ring, wherein the actuation element (15) is arranged on the nozzle body (16).

4. A device (100, 100') according to one of the claims 1 to 3, **characterised in that** the nozzle body (16) is in active connection or can be brought into active connection with the valve body (10) in a manner such that a displacing of the nozzle body (16) from the dispensing position into the loaded position creates a displacing of the valve body (10) from the discharging position into the charging position.

5. A device (100, 100') according to one of the claims 1 to 4, **characterised in that** the device comprises an activation mechanism (26) for holding the valve body (10) in the charging position.

6. A device (100, 100') according to claim 5, **characterised in that** in the charging position of the valve body (10), a displacing of the nozzle body (16) from the dispensing position into the loaded position effects a reduction of the volume of the spray burst container (19).

7. A device (100, 100') according to claim 5, **characterised in that** the device (100, 100') comprises a blocking element which is arranged in a manner such that a displacing of the nozzle body (16) from the dispensing position into the loaded position is prevented when the valve body (10) is situated in the charging position.

8. A device (100, 100') according to one of the claims 5 to 7, **characterised in that** the activation mechanism (26) comprises a holding element (27) and is arranged laterally of the valve body (10) and in particular can be actuated transversely to a flow direction of the liquid through the valve body (10), wherein preferably. the holding element (27) embraces the valve body regionally, in particular on two sides, preferably completely.

9. A device (100, 100') according to claim 8, **characterised in that** the holding element (27) comprises an opening with at least one arresting element (22), wherein the opening preferably has two different cross sections, wherein the openings in particular are designed as two circle openings of a different diameter which engage into one another.

10. A device (100, 100') according to one of the claims 8 or 9, **characterised in that** a restoring device, in particular a spring (2) for holding the holding element (27) in an end position is arranged on the activation mechanism.

11. A device (100, 100') according to one of the claims 1 to 10, **characterised in that** the outlet nozzle (23) is closed with an outlet closure element (25, 25'), wherein, the outlet closure element (25, 25') preferably comprises a resiliently mounted sealing element, in particular a sealing plug.

12. A device (100, 100') according to claim 11, **characterised in that** the outlet closure element (25, 25') is compressible at least regionally, in particular is manufactured of a compressible material.

13. A device (100, 100') according to one of the claims 1 to 12, **characterised in that** the valve body (10) is connected or connectable to an interior of the container (3) upstream of the non-return valve (28).

14. A device (100, 100') according to one of the claims 1 to 13, **characterised in that** the valve body (10) upstream of the non-return valve (18), in particular with the main body (5) forms a size-variable re-drawing chamber (20, 20').

15. A spray applicator (10) for dispensing an active substance, in particular a nose spray, comprising a container (3), on which a device (100, 100') according to one of the claims 1 to 14 is arranged, wherein preferably the contents of the container (3) is closed to the surroundings by a bacteria-sealing valve (28).

## Revendications

1. Dispositif (100, 100') destiné à la distribution dosée d'un liquide à partir d'un récipient (3), en particulier à la distribution d'un brouillard de pulvérisation, comprenant
un corps de base (5) destiné à être fixé au récipient (3),
un corps de buse (16) comportant une buse de sortie (23), le corps de buse (16) étant monté de manière à pouvoir être déplacé par rapport au corps de base (5), d'une position de distribution à une position d'armement,
un ressort de rappel (14) destiné à déplacer le corps de buse (16) de la position d'armement à la position de distribution,
un corps de valve (10) qui est monté de manière à pouvoir être déplacé par rapport au corps de base (5), d'une position de charge à une position de décharge,
un clapet de non-retour (28) étant disposé dans le corps de valve (10), et
le corps de valve (10) formant avec le corps de buse (16) une chambre d'expulsion de pulvérisation (19) à volume variable, la chambre d'expulsion de pulvérisation (19) étant reliée à la buse de sortie (23).

2. Dispositif (100, 100') selon la revendication 1, **caractérisé en ce que** le dispositif présente un ressort d'expulsion de pulvérisation (7) qui est destiné à déplacer le corps de valve (10) de la position de charge à la position de décharge.

3. Dispositif (100, 100') selon la revendication 1 ou 2, **caractérisé en ce que** le dispositif présente un élément d'actionnement (15), de préférence une bague de pression, l'élément d'actionnement (15) étant disposé sur le corps de buse (16).

4. Dispositif (100, 100') selon l'une des revendications 1 à 3, **caractérisé en ce que** le corps de buse (16) est en liaison active ou peut être amené en liaison active avec le corps de valve (10) de manière à ce qu'un déplacement du corps de buse (16) de la position de distribution à la position d'armement provoque un déplacement du corps de valve (10) de la position de décharge à la position de charge.

5. Dispositif (100, 100') selon l'une des revendications 1 à 4, **caractérisé en ce que** le dispositif présente un mécanisme de déclenchement (26) destiné à maintenir le corps de valve (10) dans la position de charge.

6. Dispositif (100, 100') selon la revendication 5, **caractérisé en ce que** dans la position de charge du corps de valve (10), un déplacement du corps de buse (16) de la position de distribution à la position d'armement provoque une réduction du volume de la chambre d'expulsion de pulvérisation (19).

7. Dispositif (100, 100') selon la revendication 5, **caractérisé en ce que** le dispositif (100, 100') présente un élément de blocage qui est disposé de manière à ce qu'un déplacement du corps de buse (16) de la position de distribution à la position d'armement soit empêché si le corps de valve (10) se trouve dans la position de charge.

8. Dispositif (100, 100') selon l'une des revendications 5 à 7, **caractérisé en ce que** le mécanisme de déclenchement (26) présente un élément de maintien (27) et est disposé sur le côté du corps de valve (10) et peut être actionné notamment transversalement à une direction d'écoulement du liquide à travers le corps de valve (10), l'élément de maintien (27) entourant de préférence le corps de valve au moins en partie, notamment sur deux côtés, de préférence complètement.

9. Dispositif (100, 100') selon la revendication 8, **caractérisé en ce que** l'élément de maintien (27) présente une ouverture avec au moins un élément de verrouillage (22), l'ouverture présentant de préférence deux sections transversales différentes, l'ouverture étant notamment réalisée sous forme de deux ouvertures circulaires de diamètres différents, imbriquées l'une dans l'autre.

10. Dispositif (100, 100') selon l'une des revendications 8 ou 9, **caractérisé en ce qu'**un dispositif de rappel, en particulier un ressort (2), destiné retenir l'élément de maintien (27) dans une position terminale, est disposé sur le mécanisme de déclenchement.

11. Dispositif (100, 100') selon l'une des revendications 1 à 10, **caractérisé en ce que** la buse de sortie (23) est fermée par un élément d'obturation de sortie (25, 25'), l'élément d'obturation de sortie (25, 25') comportant de préférence un élément d'étanchéité monté de façon élastique, en particulier un tenon d'étanchéité.

12. Dispositif (100, 100') selon la revendication 11, **caractérisé en ce que** l'élément d'obturation de sortie (25, 25') peut être comprimé au moins dans certaines parties et est notamment fabriqué à partir d'un matériau compressible.

13. Dispositif (100, 100') selon l'une des revendications 1 à 12, **caractérisé en ce qu'**en amont du clapet de non-retour (28), le corps de valve (10) est relié ou peut être relié à un espace interne du récipient (3).

14. Dispositif (100, 100') selon l'une des revendications 1 à 13, **caractérisé en ce qu'**en amont du clapet de non-retour (28), le corps de valve (10) forme, notamment avec le corps de base (5), une chambre de tirage (20, 20') à volume variable.

15. Applicateur de pulvérisation (101) destiné à distribuer une substance active, en particulier un spray nasal, comprenant un récipient (3) sur lequel est placé un dispositif (100, 100') selon l'une des revendications 1 à 14, le contenu du récipient (3) étant de préférence isolé vis-à-vis de l'environnement à l'aide d'une valve étanche aux bactéries (28).
